# FASCICULE DE BREVET EUROPEEN

(11) **EP 1 137 548 B1**
(45) Date de publication et mention de la délivrance du brevet: **21.09.2005**
(21) Numéro de dépôt: 00969454.8
(22) Date de dépôt: 09.10.2000
(51) Int. Cl.: B60C 9/22, B60C 9/20

(54) **PNEUMATIQUE A ENDURANCE AMELIOREE**
LUFTREIFEN MIT VERBESSERTER AUSDAUER
TYRE WITH IMPROVED TOUGHNESS

(30) Priorité: 11.10.1999 FR 9912745
(43) Date de publication de la demande: 04.10.2001
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: DENOUEIX, Jean-Yves, F-63112 Blanzat (FR); COSTA PEREIRA, Pedro, F-63000 Clermont-Ferrand (FR)
(74) Mandataire: Dequire, Philippe Jean-Marie Denis
(86) Numéro de dépôt international: PCT/EP2000/009865
(87) Numéro de publication internationale: WO 2001/026919

(56) Documents cités:
- EP-A- 0 329 593
- EP-A- 0 414 470
- EP-A- 0 488 734
- EP-A- 0 845 348
- WO-A-99/25571
- PATENT ABSTRACTS OF JAPAN vol. 1995, no. 06, 31 juillet 1995 (1995-07-31) & JP 07 069005 A (BRIDGESTONE CORP), 14 mars 1995 (1995-03-14)

## Description

L'invention concerne un pneumatique pour véhicule et notamment un pneumatique dont l'architecture est optimisée pour renforcer son endurance et sa résistance à la vitesse.

Il est désormais usuel notamment pour des pneumatiques pour des véhicules de tourisme destinés à rouler à des vitesses élevées d'utiliser pour renforcer le sommet une nappe additionnelle de renforts orientés circonférentiellement. Cette nappe peut être disposée au-dessus des nappes sommet de renforcement à angles elles aussi usuellement utilisées.

Dans une telle configuration, cette nappe de renforts orientés circonférentiellement est la nappe radialement la plus extérieure du sommet du pneumatique et subit en premier les diverses agressions que peuvent subir les pneumatiques en roulage.

Une rupture en roulage de l'un ou de plusieurs de ces renforts circonférentiels peut être dommageable pour la durée de vie du pneumatique. En effet, de telles ruptures diminuent le frettage du sommet mais aussi permettent des infiltrations d'eau le long des renforts circonférentiels ce qui peut entraîner des phénomènes de corrosion des renforts métalliques.

Dans ce qui suit, on entend par « sillon circonférentiel » un sillon disposé sur la surface radialement extérieure du pneumatique et orienté dans la direction circonférentielle ou sensiblement dans cette direction et continu sur toute la circonférence du pneumatique.

On entend par « largeur axiale d'un sillon circonférentiel » la largeur axiale maximale du sillon lorsqu'il est strictement circonférentiel ou, lorsqu'il est orienté sensiblement circonférentiellement, soit avec une légère angulation ou ondulation relativement à cette direction, la distance axiale séparant les deux plans circonférentiels disposés de part et d'autre du sillon et tangents chacun à l'une des faces du sillon.

On entend par « titre », la masse en grammes de mille mètres d'un renfort. Le titre est exprimé en tex. La contrainte subie par un renfort ou le module de ce renfort sont exprimés en « cN/tex », cN voulant dire centi-newton.

On entend par « renfort » (« reinforcing thread ») tout élément de renforcement sous forme d'un fil, susceptible de renforcer une matrice déterminée, par exemple une matrice de caoutchouc. A titre de renforts, on citera par exemple des fibres multifilamentaires (« multifilament yarns »), ces fibres pouvant être tordues ou non sur elles-mêmes, des fils unitaires tels que des monofils de diamètre élémentaire élevé, avec ou sans torsion sur eux-mêmes, des câblés ou des retors (« cords ») obtenus par des opérations de câblage ou retordage de ces fils unitaires ou de ces fibres, de tels renforts pouvant être hybrides, c'est-à-dire composites, comportant des éléments de natures différentes.

On entend par « retors » (« plied yarn » ou « folded yarn ») un renfort constitué par deux brins (« single yarns ») ou plus assemblés ensemble par des opérations de retordage ; ces brins, généralement formés de fibres multifilamentaires, sont d'abord retordus individuellement dans un sens (direction de torsion S ou Z) au cours d'une première étape de retordage, puis tordus ensemble en sens inverse (direction de torsion Z ou S, respectivement) au cours d'une seconde étape de retordage.

On entend par « renfort adhérisé » un renfort ayant subi un traitement d'enduction approprié, dit d'encollage ou d'adhérisation, susceptible de faire adhérer ce renfort, après un traitement thermique approprié, à la matrice à laquelle il est destiné.

On entend par « pas de pose p » d'un renfort orienté sensiblement circonférentiellement et enroulé en spirale la distance séparant transversalement les axes de deux spires de renfort adjacentes. Le pas de pose est l'inverse de la « densité de pose d » qui correspond au nombre de spires de renfort contenues dans une largeur axiale donnée. Usuellement d s'exprime en nombre de renforts par décimètre (f/dm) et p en millimètres, ainsi p = 100/d. L'invention a pour objet un pneumatique comportant un sommet prolongé par deux flancs et deux bourrelets, une carcasse ancrée dans les deux bourrelets, dans lequel le sommet comprend radialement de l'intérieur vers l'extérieur : au moins une nappe de renforcement formée de renforts parallèles et orientés selon un angle α relativement à la direction circonférentielle compris entre 10 et 75 degrés, au moins une nappe de renforts orientés sensiblement circonférentiellement enroulés en spirale et s'étendant axialement sensiblement au-dessus de l'ensemble de ladite nappe de renforcement, et une bande de roulement présentant des sculptures sur sa face extérieure avec au moins un sillon circonférentiel.

Un pneumatique de type est par exemple connu du document EP-A-0 488 734.

Le pneumatique de l'invention est caractérisé en ce que, dans les zones disposées radialement entre le sillon circonférentiel et la nappe de renforcement formée de renforts orientés selon α, le pas de pose des renforts enroulés en spirale est supérieur ou égal à la largeur axiale du sillon circonférentiel.

Sous les sillons circonférentiels de la sculpture du pneumatique, le fait que le pas de pose des renforts orientés circonférentiellement et enroulés en spirale est supérieur ou égal à la largeur axiale du sillon veut dire que, d'un côté du sillon à l'autre, on n'a disposé, au plus, qu'un seul enroulement de renfort circonférentiel. Ce mode de réalisation diminue donc de façon sensible la probabilité d'une rupture accidentelle de ces renforts et donc renforce la résistance du pneumatique dans son ensemble.

Cette solution a aussi l'avantage d'éviter une trop grande variation dans la largeur, lors du passage des sillons, de la rigidité de ceinturage que procurent les renforts orientés circonférentiellement. Cet effet est d'autant plus important que le module de ces renforts circonférentiels est élevé. C'est aussi le cas lorsque l'angle α d'orientation des renforts des nappes de renforcement augmente, c'est-à-dire lorsque la part des efforts circonférentiels supportés par les renforts circonférentiels augmente relativement à la part supportée par la ou les nappes de renforcement dont les renforts sont orientés selon l'angle α relativement à la direction circonférentielle.

Les renforts circonférentiels reprennent des efforts circonférentiels très élevés. En conséquence, tout point d'arrêt de ces renforts est une zone de fort cisaillement du mélange caoutchoutique qui entoure le renfort. En conséquence, tout point d'arrêt est une zone favorable pour l'initiation et la propagation d'un dommage. La solution proposée a l'avantage de ne pas entraîner l'apparition de points d'arrêt des renforts sous les sillons ou dans leur voisinage.

La solution proposée a aussi l'avantage de ne pas rendre plus complexe la fabrication du pneumatique. C'est une solution très simple à mettre en oeuvre.

Le pas de pose peut avantageusement être supérieur ou égal à deux fois la largeur axiale du sillon circonférentiel. Dans ce cas, il y a au moins une demi-circonférence du pneumatique dans laquelle toute section axiale de la zone disposée entre le sillon et la nappe de renforcement ne comporte aucun renfort enroulé en spirale.

Avantageusement, la nappe de renforts orientés sensiblement circonférentiellement est constituée d'au moins deux renforts enroulés simultanément en spirale. Cela permet de diminuer le temps de pose de la nappe. Le nombre maximal de renforts que l'on peut enrouler simultanément est au plus quatre.

Avantageusement, le sillon circonférentiel du pneumatique selon l'invention a une largeur axiale supérieure ou égale à 3,5 mm.

Selon un mode de réalisation particulier, la bande de roulement du pneumatique est, sur au moins une zone axiale donnée du sommet, en contact direct avec les renforts orientés circonférentiellement. Cela facilite la confection du pneumatique en diminuant le nombre de produits à poser. Lorsque la bande de roulement comporte un premier mélange destiné à venir en contact avec le sol ainsi qu'une sous-couche disposée radialement sous ledit premier mélange, c'est la sous-couche qui est avantageusement en contact direct avec les renforts orientés circonférentiellement.

Les renforts orientés sensiblement circonférentiellement et enroulés en spirale développent, avantageusement, une contrainte sous 3 % de déformation supérieure à 12 cN/tex et préférentiellement supérieure à 20 cN/tex. Ces renforts présentent donc un haut module d'élasticité aux déformations élevées, ce qui permet à la nappe qu'ils constituent d'assumer toutes ses fonctions, notamment le frettage du sommet à haute vitesse.

Ces renforts peuvent aussi présenter un module initial inférieur à 900 cN/tex et de préférence, inférieur à 800 cN/tex. Le bas module initial de ces renforts a l'avantage d'améliorer le confort du pneumatique et de diminuer son bruit de roulement bord de piste à basse vitesse.

De tels renforts peuvent être constitués par l'assemblage d'au moins un brin de Nylon associé à au moins un brin aramide.

Plusieurs modes de réalisation de l'invention sont maintenant décrits à l'aide du dessin annexé dans lequel :
- la figure 1 présente une demi-coupe axiale d'un pneumatique selon l'invention ;
- la figure 2 présente une demi-coupe axiale d'un second mode de réalisation d'un pneumatique selon l'invention ;
- la figure 3 présente un troisième mode de réalisation d'un pneumatique selon l'invention ; et
- la figure 4 présente les courbes force allongement de trois types de renforts décrits ci-après.

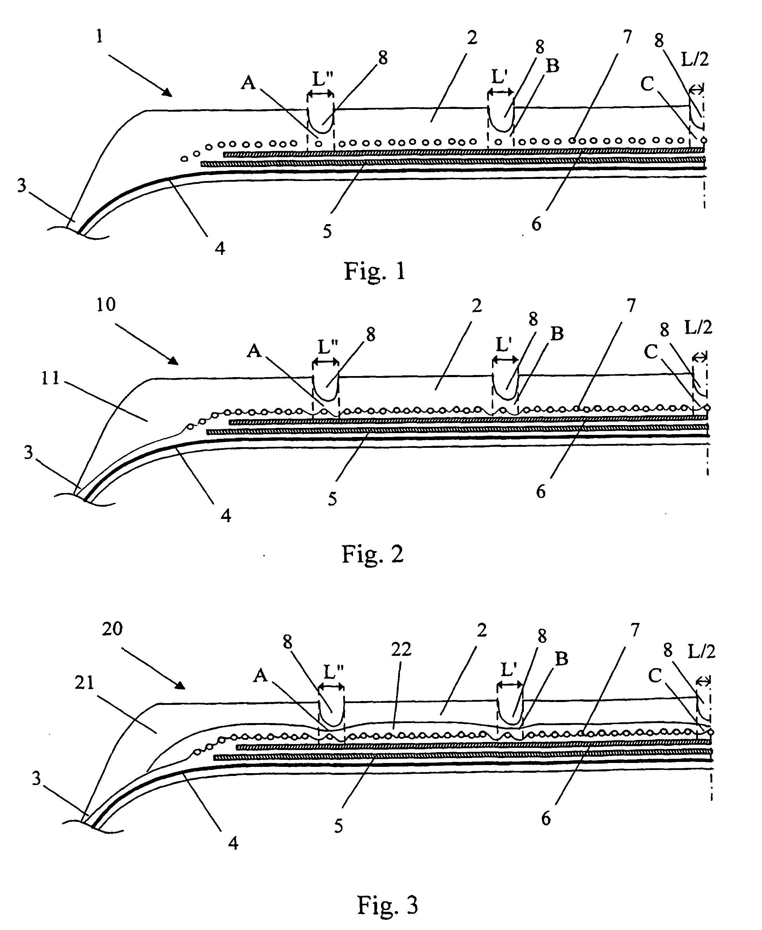

La figure 1 présente une demi-coupe axiale schématique d'un pneumatique 1 selon l'invention. Ce pneumatique comprend un sommet 2 prolongé par deux flancs 3 et deux bourrelets non représentés. Le sommet comporte une nappe carcasse 4 ancrée de façon connue dans les deux bourrelets, deux nappes de renforcement 5 et 6 formées de renforts parallèles dans chaque nappe et croisés d'une nappe à la suivante en faisant avec la direction circonférentielle des angles (α, β) d'environ 30 degrés et une nappe de renforts orientés sensiblement circonférentiellement 7. La nappe carcasse 4 est orientée sensiblement à 90 degrés relativement à la direction circonférentielle, c'est une nappe carcasse radiale.

La nappe de renforts orientés circonférentiellement 7 est composée de renforts textiles enroulés en spirale pour assurer un bon frettage du sommet 2. La nappe peut être réalisée par enroulement en spirale du renfort seul, c'est-à-dire que le renfort n'est pas noyé dans une bande de caoutchouc. Ce renfort est aussi appliqué directement sur le mélange de caoutchouc radialement directement adjacent intérieurement. De préférence, on pose à la fois, de 2 à 4 renforts. Dans l'exemple de la figure 1, ces renforts textiles sont un retors adhérisé de titre égal à 521 tex élaboré à partir de deux brins aramides identiques de 167 tex surtordus individuellement à 280 t/m et d'un brin Nylon de 140 tex surtordu à 280 t/m, ces trois brins étant ensuite retordus simultanément à 280 t/m dans la direction opposée. Le module initial de ce renfort est égal à 740 cN/tex et la contrainte développée sous 3 % de déformation est égale à 30 cN/tex.

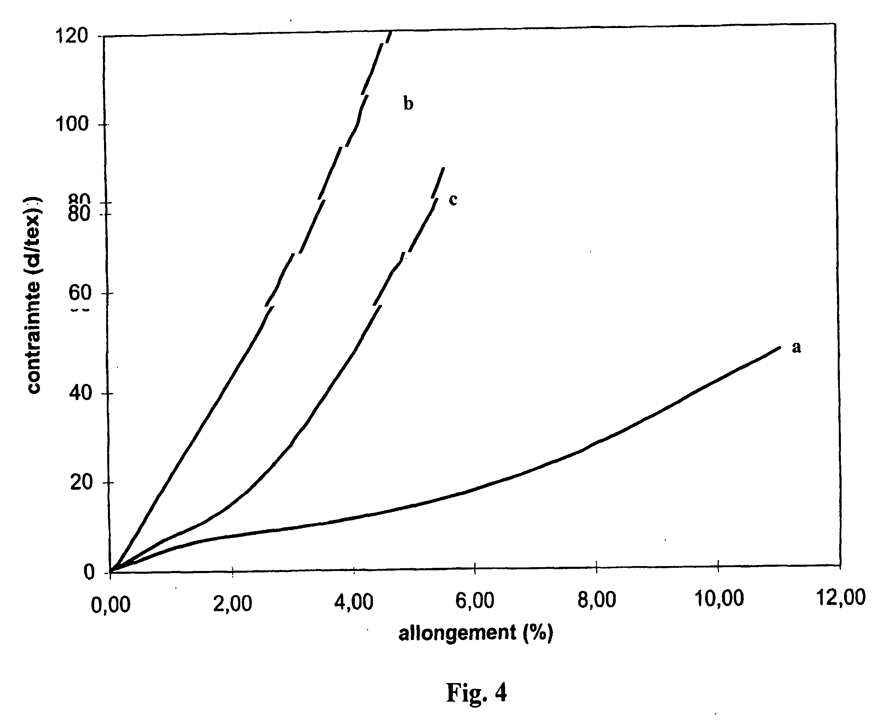

La figure 4 présente une courbe force allongement de ce renfort (courbe c) ainsi que celles de deux autres renforts usuels :
- courbe a : renfort de Nylon (2 brins de Nylon de 441 tex) ;
- courbe b : renfort aramide (2 brins aramide de titre 167 tex) ;
- courbe c : renfort aramide nylon.

Le renfort Nylon (courbe a) est un retors adhérisé de titre 441 tex élaboré à partir de 2 brins Nylon identiques de 210 tex surtordus individuellement à 200 t/m (tours/mètre) puis retordus simultanément à 200 t/m dans la direction opposée. Le module initial de ce renfort est égal à 530 cN/tex, la contrainte développée sous 3 % est de 9 cN/tex. Ce renfort a donc un bas module d'élasticité aux faibles et aux fortes déformations.

Le renfort aramide (courbe b) est un retors adhérisé de titre égal à 376 tex élaboré à partir de 2 brins aramide identiques de 167 tex surtordus individuellement à 440 t/m puis retordus simultanément à 440 t/m dans la direction opposée. Le module initial de ce renfort est égal à 2030 cN/tex, la contrainte développée sous 3 % est de 68 cN/tex. Ce renfort a un haut module d'élasticité.

Les renforts illustrés aux courbes b et c présentent l'avantage d'avoir un haut module d'élasticité aux fortes déformations ce qui leur donne une grande efficacité pour fretter les sommets des pneumatiques tout en limitant la densité de renforts nécessaire. Le renfort aramide nylon a aussi un bas module initial ce qui a l'avantage d'améliorer le confort du pneumatique et de diminuer son bruit de roulement bord de piste à basse vitesse.

Le pneumatique 1 comporte dans sa demi-section axiale présentée à la figure 1 trois sillons 8, un sillon central et deux sillons latéraux. Ces sillons 8 sont circonférentiels de largeurs axiales respectivement L, L' et L". La largeur axiale de ces trois sillons est supérieure à 3,5 mm. Dans les zones annulaires C, B et A respectivement, la figure 1 illustre qu'il n'y a qu'un seul renfort de renfort de la nappe 7 présent. Cela permet de limiter les risques de dégradation de ce renfort dans ces zones sensibles.

A la figure 2, on voit une demi-coupe axiale d'un pneumatique 10 selon l'invention. Dans ce mode de réalisation, la bande de roulement 11 est en contact direct avec les renforts de renfort de la nappe 7. Cela veut dire que le mélange de caoutchouc constituant de la bande de roulement 11 est appliqué par enroulement d'une bande directement sur les renforts circonférentiels sans l'interposition d'une quelconque gomme de liaison. Cela facilite la fabrication du pneumatique en diminuant le nombre de produits différents à poser ainsi que le temps nécessaire à cette fabrication.

Dans le cas d'un hybride 167*167*140 à 100 f/dm (le pas de pose est donc de 1 mm), cette disposition revient à enlever 4 à 5 renforts de frettage sous chaque sillon circonférentiel.

Compte tenu du module élevé aux fortes déformations, la surtension en centrifugation est très faible.

A la figure 3, le pneumatique 20 comprend, entre la bande de roulement 11 et la nappe de renforts orientés circonférentiellement 7, une sous couche 22. Cette sous couche 22 est appliquée directement sur les renforts de la nappe 7.

Selon un premier mode de réalisation, la confection du pneumatique selon l'invention peut avantageusement être réalisée sur un noyau rigide imposant la forme de sa cavité intérieure, tels ceux décrits par EP 242 840 ou EP 822 047. On applique sur ce noyau, dans l'ordre requis par l'architecture finale, tous les constituants du pneumatique, qui sont disposés directement à leur place finale, sans subir de conformation à aucun moment de la confection. La cuisson s'effectue sur noyau, celui-ci n'étant retiré qu'après la phase de vulcanisation. Cette confection peut notamment utiliser les dispositifs décrits dans le brevet EP 0 243 851 pour la pose des fils du renfort de carcasse, EP 0 248 301 pour la pose des renforts de sommet et EP 0 264 600 pour la pose des gommes caoutchoutiques.

Ce mode de fabrication a l'avantage de réduire fortement voire d'éliminer les précontraintes imposées aux renforts, particulièrement à ceux orientés à 0°, lors des phases traditionnelles de conformation

On peut aussi refroidir partiellement le bandage sur le noyau pour maintenir les renforts dans l'état de déformation imposé lors de la pose.

On peut aussi, de manière équivalente, fabriquer le pneumatique sur un tambour tel que décrit dans WO 97/47 463 ou EP 718 090, à condition de faire la conformation de l'ébauche du pneumatique avant d'effectuer la pose des renforts orientés circonférentiellement.

On peut encore réaliser la pose des renforts orientés circonférentiellement sur une forme à la géométrie identique à la forme visée dans le moule de cuisson. Le bloc sommet est ensuite assemblé avec l'ébauche complémentaire du pneumatique suivant des techniques de transfert connues de l'homme de l'art, puis, toujours suivant des principes connus, le pneumatique est emboîté et mis sous pression par déploiement d'une membrane à l'intérieur du pneumatique.

Ce mode de réalisation garantit aussi l'absence de précontraintes dues à la conformation en presse de vulcanisation.

Tous ces modes de réalisation permettent d'obtenir que les renforts orientés circonférentiellement soient enroulés en spirale avec des diamètres de pose s'écartant, sur toute la largeur du sommet 2, de moins de 0,5 % des diamètres finaux de ces renforts dans le pneumatique après vulcanisation.

## Revendications

1. Pneumatique (1) comportant un sommet (2) prolongé par deux flancs (3) et deux bourrelets, une carcasse (4) ancrée dans les deux bourrelets, ledit sommet comprenant radialement de l'intérieur vers l'extérieur :
- au moins une nappe de renforcement (5, 6) formée de renforts parallèles et orientés selon un angle α relativement à la direction circonférentielle compris entre 10 et 75 degrés,
- au moins une nappe de renforts orientés sensiblement circonférentiellement (7) enroulés en spirale et s'étendant axialement sensiblement au-dessus de l'ensemble de ladite nappe de renforcement, et
- une bande de roulement (11) présentant des sculptures sur sa face extérieure avec au moins un sillon circonférentiel (8),
**caractérisé en ce que**, dans les zones (A, B, C) disposées radialement entre ledit sillon (8) et ladite nappe de renforcement (5, 6) formée de renforts orientés selon α, le pas de pose desdits renforts (7) enroulés en spirale est supérieur ou égal à la largeur axiale dudit sillon.

2. Pneumatique selon la revendication 1, dans lequel le pas de pose desdits renforts enroulés en spirale est supérieur ou égal à deux fois la largeur axiale dudit sillon.

3. Pneumatique selon l'une des revendications 1 ou 2, dans lequel lesdits renforts orientés circonférentiellement comprennent au moins deux renforts enroulés simultanément en spirale.

4. Pneumatique selon la revendication 3, dans lequel les renforts orientés circonférentiellement comprennent au plus quatre renforts enroulés simultanément en spirale.

5. Pneumatique selon l'une des revendications 1 à 4, dans lequel ledit sillon circonférentiel a une largeur axiale supérieure ou égale à 3,5 mm.

6. Pneumatique selon l'une des revendications 1 à 5, dans lequel ladite bande de roulement est en contact direct avec lesdits renforts enroulés en spirale sur au moins une zone axiale donnée dudit sommet.

7. Pneumatique selon l'une des revendications 1 à 6, dans lequel, la bande de roulement comportant un premier mélange destiné à venir en contact avec le sol ainsi qu'une sous-couche disposée radialement sous ledit premier mélange, sur au moins une zone axiale donnée dudit sommet, ladite sous-couche est en contact direct avec lesdits renforts enroulés en spirale.

8. Pneumatique selon l'une des revendications 1 à 7, les renforts orientés circonférentiellement développent une contrainte sous 3 % de déformation supérieure à 12 cN/tex.

9. Pneumatique selon la revendication 8, dans lequel les renforts orientés circonférentiellement développent une contrainte sous 3 % de déformation supérieure à 20 cN/tex.

10. Pneumatique selon l'une des revendications 8 ou 9, dans lequel lesdits renforts orientés circonférentiellement possèdent un module initial inférieur à 900 cN/tex.

11. Pneumatique selon la revendication 10, dans lequel lesdits renforts orientés circonférentiellement possèdent un module initial inférieur à 800 cN/tex.

12. Pneumatique selon l'une des revendications 1 à 11, dans lequel lesdits renforts orientés circonférentiellement sont constitués d'un assemblage d'au moins un brin de Nylon associé à au moins un brin aramide.

## Patentansprüche

1. Luftreifen (1), der einen Scheitel (2), der sich in zwei Flanken (3) und zwei Wülsten fortsetzt und eine Karkasse (4) aufweist, die in den beiden Wülsten verankert ist, wobei der Scheitel in radialer Richtung von innen nach außen aufweist:
- mindestens eine Verstärkungslage (5,6), die aus parallelen und relativ zur Umfangsrichtung in einem Winkel α von 10 bis 75° orientierten Verstärkungen gebildet wird,
- mindestens eine Lage von spiralförmig gewickelten, in etwa in Umfangsrichtung orientierten Verstärkungen (7), die sich in axialer Richtung in etwa über die gesamte Verstärkungslage erstrecken, und
- einen Laufstreifen (11), der an seiner Außenseite eine Profilierung mit mindestens einer umlaufenden Rille (8) aufweist,
**dadurch gekennzeichnet, dass** in den Zonen (A, B, C), die in radialer Richtung zwischen der Rille (8) und der Verstärkungslage (5, 6) liegen, die aus den gemäß α orientierten Verstärkungen gebildet wird, der Verlegungsabstand der spiralförmig gewickelten Verstärkungen (7) der axialen Breite der Rille entspricht oder darüber liegt.

2. Luftreifen nach Anspruch 1, bei dem der Verlegungsabstand der spiralförmig gewickelten Verstärkungen der zweifachen axialen Breite der Rille entspricht oder darüber liegt.

3. Luftreifen nach einem der Ansprüche 1 oder 2, wobei die in Umfangsrichtung ausgerichteten Verstärkungen mindestens zwei gleichzeitig spiralförmig gewickelte Verstärkungen umfassen.

4. Luftreifen nach Anspruch 3, wobei die in Umfangsrichtung ausgerichteten Verstärkungen höchstens vier gleichzeitig spiralförmig gewickelte Verstärkungen umfassen.

5. Luftreifen nach einem der Ansprüche 1 bis 4, wobei die umlaufende Rille eine axiale Breite von 3,5 mm oder darüber aufweist.

6. Luftreifen nach einem der Ansprüche 1 bis 5, wobei der Laufstreifen in mindestens einer gegebenen axialen Zone des Scheitels in direktem Kontakt mit den spiralförmig gewickelten Verstärkungen ist.

7. Luftreifen nach einem der Ansprüche 1 bis 6, bei dem der Laufstreifen eine erste Mischung, die mit dem Boden in Kontakt kommen soll, sowie eine Unterplatte enthält, die in mindestens einer gegebenen axialen Zone des Scheitels in radialer Richtung unter der ersten Mischung angeordnet ist, wobei die Unterplatte mit den spiralförmig gewickelten Verstärkungen in direktem Kontakt ist.

8. Luftreifen nach einem der Ansprüche 1 bis 7, wobei die in Umfangsrichtung orientierten Verstärkungen eine Festigkeit bei 3 % Deformation über 12 cN/tex aufweisen.

9. Luftreifen nach Anspruch 8, wobei die in Umfangsrichtung orientierten Verstärkungen eine Festigkeit bei 3 % Deformation über 20 cN/tex aufweisen.

10. Luftreifen nach einem der Ansprüche 8 oder 9, wobei die in Umfangsrichtung ausgerichteten Verstärkungen einen Anfangsmodul unter 900 cN/tex aufweisen.

11. Luftreifen nach Anspruch 10, wobei die in Umfangsrichtung orientierten Verstärkungen einen Anfangsmodul unter 800 cN/tex aufweisen.

12. Luftreifen nach einem der Ansprüche 1 bis 11, bei dem die in Umfangsrichtung orientierten Verstärkungen aus einer Einheit von mindestens einem Nylonstrang in Kombination mit mindestens einem Aramidstrang gebildet werden.

## Claims

1. A tyre (1) comprising a crown (2) extended by two sidewalls (3) and two beads, a carcass anchored in the two beads, said crown comprising radially from the inside towards the outside:
- at least one reinforcement ply (5, 6) formed of parallel reinforcing threads oriented at an angle α relative to the circumferential direction of between 10 and 75 degrees,
- at least one ply of reinforcing threads which are oriented substantially circumferentially (7) and are wound in a spiral and extend axially substantially above the assembly of said reinforcement ply, and
- a tread (11) having tread patterns on its outer face with at least one circumferential groove (8),
**characterised in that**, in the zones (A, B, C) arranged radially between said groove (8) and said reinforcement ply (5, 6) formed of reinforcing threads oriented at α, the laying pitch for said reinforcing threads (7) which are wound in a spiral is greater than or equal to the axial width of said groove.

2. A tyre according to Claim 1, in which the laying pitch for said reinforcing threads which are wound in a spiral is greater than or equal to twice the axial width of said groove.

3. A tyre according to one of Claims 1 or 2, in which said circumferentially oriented reinforcing threads comprise at least two reinforcing threads wound simultaneously in a spiral.

4. A tyre according to Claim 3, in which the circumferentially oriented reinforcing threads comprise at most four reinforcing threads wound simultaneously in a spiral.

5. A tyre according to one of Claims 1 to 4, in which said circumferential groove has an axial width greater than or equal to 3.5 mm.

6. A tyre according to one of Claims 1 to 5, in which said tread is in direct contact with said reinforcing threads which are wound in a spiral over at least one given axial zone of said crown.

7. A tyre according to one of Claims 1 to 6, in which, the tread comprising a first mix intended to come into contact with the ground and an underlayer arranged radially beneath said first mix, over at least one given axial zone of said crown, said underlayer is in direct contact with said reinforcing threads which are wound in a spiral.

8. A tyre according to one of Claims 1 to 7, in which the circumferentially oriented reinforcing threads develop a stress under 3% deformation greater than 12 cN/tex.

9. A tyre according to Claim 8, in which the circumferentially oriented reinforcing threads develop a stress under 3% deformation greater than 20 cN/tex.

10. A tyre according to one of Claims 8 or 9, in which said circumferentially oriented reinforcing threads have an initial modulus of less than 900 cN/tex.

11. A tyre according to Claim 10, in which said circumferentially oriented reinforcing threads have an initial modulus of less than 800 cN/tex.

12. A tyre according to one of Claims 1 to 11, in which said circumferentially oriented reinforcing threads are formed of an assembly of at least one single yarn of nylon associated with at least one aramid single yarn.
